# EUROPÄISCHE PATENTSCHRIFT

(11) **EP 0 801 819 B1**
(45) Veröffentlichungstag und Bekanntmachung des Hinweises auf die Patenterteilung: **07.10.1998**
(21) Anmeldenummer: 95928482.9
(22) Anmeldetag: 26.07.1995
(51) Int. Cl.: H01M 4/70

(54) **ELEKTRODENANORDNUNG, DARAUS HERGESTELLTE ELEKTROCHEMISCHE EINRICHTUNG UND VERFAHREN ZU DEREN HERSTELLUNG**
ELECTRODE ARRANGEMENT, AN ELECTRO-CHEMICAL DEVICE MADE THEREFROM AND A METHOD OF MANUFACTURING THE SAID ARRANGEMENT
ENSEMBLE ELECTRODE, DISPOSITIF ELECTROCHIMIQUE FABRIQUE A PARTIR DE CE DERNIER ET PROCEDE DE FABRICATION DUDIT ENSEMBLE ELECTRODE

(30) Priorität: 24.02.1995 DE 19506496
(43) Veröffentlichungstag der Anmeldung: 22.10.1997
(73) Patentinhaber: Hoffmann, Hans, 70374 Stuttgart (DE); Siemonsen, Sven, 70376 Stuttgart (DE)
(72) Erfinder: Hoffmann, Hans, 70374 Stuttgart (DE); Siemonsen, Sven, 70376 Stuttgart (DE)
(74) Vertreter: Dreiss, Fuhlendorf, Steimle & Becker, Patentanwälte
(86) Internationale Anmeldenummer: EP9502986
(87) Internationale Veröffentlichungsnummer: WO9626552

(56) Entgegenhaltungen:
- DE-A- 3 922 425
- DE-C- 3 005 725
- Patent Abstracts of Japan, Band 8, Nr 78(E-237); & JP,A,58225569 (HITACHI SEISAKUSHO K.K.), 1983-12-27

## Beschreibung

Die vorliegende Erfindung bezieht sich auf eine Elektrodenanordnung für eine elektrochemische Einrichtung, wie Batterien, Akkumulatoren oder dgl., nach dem Oberbegriff des Anspruchs 1, ferner auf eine aus einer derartigen Elektrodenanordnung aufgebaute elektrochemische Einrichtung nach dem Oberbegriff des Anspruchs 15 und auf ein Verfahren zum Herstellen einer elektrochemischen Einrichtung nach dem Oberbegriff des Anspruchs 20.

Beispielsweise sind bei herkömmlichen Bleiakkumulatoren mindestens zwei einander gegenüberliegende plattenförmige Elektroden vorgesehen, die entweder mit PbO₂-Gel beschichtet sind oder in Form von zwei Bleiplatten ausgebildet sind, deren eine Plattenoberfläche nach einer Planté-Beschichtung zu PbO₂ gewandelt ist. In beiden Fällen entspricht die reaktive Fläche der Elektrode der Plattenoberfläche und ist daher auf deren Ausmaße begrenzt. Desweiteren besitzen die herkömmlichen Bleiakkumulatoren aufgrund der plattenförmigen Ausbildung der Elektroden nur eine eingeschränkte mechanische Stabilität. PbO₂-Gel-Akkumulatoren liefern zwar hohe Ströme, besitzen jedoch eine kurze Lebensdauer. Stationäre Akkumulatoren mit Planté-beschichteten Elektroden haben dagegen zwar eine hohe Lebensdauer, können aber keine hohen Ströme liefern, da die reaktive Oberflächenschicht im Verhältnis zur Gesamtelektrode gering ist. Daher haben diese in der Relation zur Leistungsausbeute ein relativ hohes Volumen und ein relativ hohes Gewicht.

Aus diesen Gründen sind eine Vielzahl von Versuchen gemacht worden, die Oberfläche der Elektroden zu vergrößern, wie dies bspw. aus der DE 42 01 420 A1, der DE 26 39 881 A1 und der DE-PS 146 063 ersichtlich ist. In allen Fällen ergibt sich zwar durch zum Teil relativ komplizierte konstruktive und fertigungstechnische Maßnahmen eine Vergrößerung der Oberfläche, jedoch verbleiben nach wie vor die Nachteile der eingeschränkten mechanischen Stabilität und verglichen mit der Leistungsausbeute ein relativ hohes Volumen und Gewicht. Aufgabe der vorliegenden Erfindung ist es deshalb, eine Elektrodenanordnung für Zellen von Batterien, Akkumulatoren oder dgl. elektrochemische Einrichtungen und eine mit einer derartigen Elektrodenanordnung hergestellte elektrochemische Einrichtung der jeweils eingangs genannten Art zu schaffen, die den heutigen Anforderungen an hohe Speicherkapazitäten bei vergleichsweise geringem Volumen und Gewicht gerecht werden und dabei eine höhere Leistungsausbeute erzielen können. Desweiteren soll ein Verfahren zum Herstellen einer derartigen elektrochemischen Einrichtung geschaffen werden, das weder arbeitsintensiver noch kostenintensiver ist.

Zur Lösung dieser Aufgabe sind bei einer Elektrodenanordnung der genannten Art bzw. bei einer eine derartige Elektrodenanordnung verwendenden elektrochemischen Einrichtung der genannten Art bzw. bei einem Verfahren zum Herstellen einer derartigen elektrochemischen Einrichtung die im Anspruch 1 bzw. im Anspruch 14 bzw. im Anspruch 20 angegebenen Merkmale vorgesehen.

Mit den erfindungsgemäßen Maßnahmen ist eine Ausgestaltung der Elektroden als räumlicher Körper erreicht, der eine große Oberfläche im Verhältnis zum eigenen Volumen aufweist. Das Volumen des räumlichen Körpers kann dabei soweit verringert werden, daß bis auf einen sehr geringen Trägeranteil das gesamte Volumen der beiden Elektroden aus an der elektrochemischen Reaktion beteiligtem Material besteht. Die beiden Elektroden sind räumlich derart ineinander verschachtelt, daß die Abstände zwischen den Elektroden sehr klein werden können, so daß eine Vielzahl von zellenartigen Reaktionsräumen entsteht, in denen die elektrochemische Reaktion abläuft.

Mit den Merkmalen gemäß Anspruch 2, wie sie bei einer bevorzugten Ausführungsform vorliegender Erfindung vorgesehen sind, ist in vorteilhafter Weise erreicht, daß die Vielzahl der zellenartigen Reaktionsräume jeweils gleich groß und vorzugsweise die Abstände der räumlichen Körper der beiden Elektroden an jedem Punkt bzw. Bereich im wesentlichen gleich groß sind. Dies führt zu im gesamten Raum der Elektrodenanordnung gleichmäßigen elektrochemischen Reaktionen, ohne daß irgendwelche Vorzugsrichtungen bestehen. Dies rührt auch daher, daß der gesamte Raum einer elektrochemischen Einrichtung von den beiden Elektroden gleichmäßig und zu gleichen Teilen eingenommen wird. Somit sind bei jedem Schnitt durch den Raum beide Elektroden-Schnittflächen gleich groß.

In weiterer vorteilhafter Ausgestaltung sind die Merkmale gemäß Anspruch 3 vorgesehen. Dies bedeutet, daß der räumliche Körper eine immer wiederkehrende geometrische Form besitzt, die aus einem Knoten mit vier aus diesem ragenden Stegen besteht. Jeder dieser Stege hat zu jedem anderen Steg einen immer gleich bleibenden Winkel. Gemäß einer Variante mit den Merkmalen nach Anspruch 4 wird ausgehend von einem Knoten auf dessen Stege in jeder Richtung ein weiterer Knoten so aufgesetzt, daß die Stege des weiteren Knoten die Fortsetzung des Steges des ersten Knotens darstellt. Auf diese Weise ergibt sich ein vollständig regelmäßiger räumlich gitterstrukturierter Körper, der so geformt ist, daß in den Zwischenräumen dieses Körpers ein weiterer Körper der gleichen Art eingelagert werden kann. Dieser eingelagerte Körper (der zweiten Elektrode) berührt den ersten Körper (der ersten Elektrode) an keiner Stelle. Die Abstände zwischen den sich überkreuzenden Stegen beider Körper sind stets innerhalb einer gleichbleibenden Toleranz.

Die Querschnitte der stegartigen Elementteile können gemäß den Merkmalen des Anspruchs 5 über die Länge gleichförmigen oder ungleichförmigen Querschnitt besitzen, wobei je nach Herstellungsart der Elektrodenanordnung nach Maßgabe der Herstellungskosten und der Produktanforderungen das eine oder andere bevorzugt wird.

Gemäß den Merkmalen des Anspruchs 6 ist eine Möglichkeit des konstruktiven Aufbaus der Elektrodenanordnung gegeben. Eine weitere zweckmäßige Ausgestaltung des Elektrodenaufbaus, der zumindest für bestimmte Größen einer derartigen elektrochemischen Einrichtung zweckmäßig ist, ist durch die Merkmale des Anspruchs 7 vorgegeben. Auf diese Weise können Einrichtungen nahezu beliebiger Raumform hergestellt werden. Zweckmäßige Weiterbildungen ergeben sich mit den Merkmalen eines oder mehrerer der Ansprüche 8 bis 11.

Je nach zu erzielender mechanischer Festigkeit bzw. zulässigem Gewicht ist die Werkstofffrage entweder gemäß den Merkmalen des Anspruchs 12 oder denen des Anspruchs 13 gelöst.

In den meisten Fällen bestehen Akkumulatoren oder andere elektrochemische Einrichtungen aus mehreren elektrisch hintereinander geschalteten Zellen. Um dies in sehr einfacher Weise erreichen zu können, sind die Merkmale gemäß einem der oder beider Ansprüche 14 und 15 vorgesehen. Es ist dabei in sehr einfacher Weise möglich, zunächst in Form der vorgenannten Elektrodenanordnung zwei Elektroden vorzusehen, deren Ausmaße der Summe der zur Verfügung zu stellenden Einzelzellen entspricht. Es können dann die räumlichen Körper der beiden Elektroden durch Schnitte, Ausnehmungen oder durch Nichtvorsehen von Ausnehmungen oder dgl. an beliebiger Stelle so getrennt werden, daß sich mehrere Einzelelektroden ergeben, wobei es ausreichend ist, eine der beiden Gesamtelektroden zu unterteilen. Danach können dann, um eine Trennung auch des vorgesehenen Elektrolyten innerhalb der einzelnen Zellen vorzusehen, die Merkmale gemäß Anspruch 16, 17 oder 18 vorgesehen sein. Eine weitere zweckmäßige Ausgestaltung ergibt sich dabei mit den Merkmalen gemäß Anspruch 19, womit auch eine mechanische Verbindung der Einzelzellen innerhalb der gesamten elektrochemischen Einrichtung erreicht ist.

Mit den zur Herstellung einer derartigen elektrochemischen Einrichtung unter Verwendung der vorgenannten Elektrodenanordnung verwendeten Merkmalen gemäß einem oder mehreren der Ansprüche 20 bis 25 ist eine einfache Möglichkeit vorgesehen, die räumlich gitterstrukturierten Körper der beiden Elektroden aus Vollmaterial herzustellen und durch das Einbringen von Wänden mechanisch auf Abstand zu halten, so daß die beiden Körper im Raum zueinander fixiert bleiben. Außerdem kann dadurch in einfacher Weise auch ein mehrzelliger Aufbau erreicht werden.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in teilweise abgebrochener perspektivischer Darstellung eine Elektrodenanordnung für eine elektrochemische Einrichtung gemäß einem ersten Ausführungsbeispiel vorliegender Erfindung;
- Figur 1A: in vergrößerter perspektivischer Darstellung ein Gitterelement einer der Elektroden der Elektrodenanordnung nach Figur 1;
- Figur 1B: eine der Figur 1 entsprechende ausschnittsweise vergrößerte Darstellung;
- Figur 2: eine Seitenansicht gemäß Pfeil II der Figur 1, jedoch strichpunktiert und schematisch zu einem Akkumulator ergänzt;
- Figur 3: eine Draufsicht gemäß Pfeil III der Figur 1;
- Figur 4: eine gegenüber der Figur 2 um 90° versetzte Seitenansicht gemäß Pfeil IV der Figur 1;
- Figur 5: in teilweise abgebrochener perspektivischer Darstellung eine Elektrodenanordnung für eine elektrochemische Einrichtung gemäß einem zweiten Ausführungsbeispiel vorliegender Erfindung, in einem noch nicht vollständig getrennten Zustand der beiden Elektroden;
- Figur 6: eine Seitenansicht gemäß Pfeil VI der Figur 5;
- Figur 7: eine Draufsicht gemäß Pfeil VII der Figur 5;
- Figur 8: ein an einem quaderförmigen Rohkörper als Ausgangswerkstück dargestelltes Bohrschema zur Herstellung einer Elektrodenanordnung für eine elektrochemische Einrichtung, jedoch gemäß einem dritten Ausführungsbeispiel vorliegender Erfindung;
- Figur 9: in abgebrochener Darstellung eine der Figur 3 entsprechende jedoch schematische Draufsicht auf die Elektrodenanordnung gemäß einem dritten Ausführungsbeispiel vorliegender Erfindung;
- Figur 10: in vergrößerter perspektivischer Darstellung ein Gitterelement einer der Elektroden der Elektrodenanordnung gemäß dem dritten Ausführungsbeispiel;
- Figuren 11 u. 12: jeweils in abgebrochener Darstellung eine der Figur 2 entsprechende Seitenansicht, jedoch schematisch und von zwei zueinander senkrechten Seiten der Elektrodenanordnung für eine elektrochemische Einrichtung gemäß dem dritten Ausführungsbeispiel;
- Figur 13: eine perspektivische Darstellung einer aus einem länglich quaderförmigen Rohkörper hergestellte Elektrodenanordnung für eine elektrochemische Einrichtung gemäß einem vierten Ausführungsbeispiel vorliegender Erfindung; und
- Figuren 14A, B und C: den Figuren 9, 11 und 12 entsprechende abgebrochene Darstellungen des vierten Ausführungsbeispiels.

Die in der Zeichnung gemäß vier Ausführungsbeispielen dargestellte Elektrodenanordnung 10 bzw. 110 bzw. 210 bzw. 310 in Form eines jeweils identischen räumlichen Körpers für jede Elektrode 11, 12 bzw. 111, 112 bzw. 211, 212 bzw. 311, 312 dient zum Aufbau einer einzelligen oder mehrzelligen Batterie, Akkumulator oder sonstigen elektrochemischen Einrichtung. Dabei sind die eine räumlich dreidimensionale gitterartige Struktur aufweisenden Elektroden 11 und 12 bzw. 111 und 112 bzw. 211 und 212 bzw. 311 und 312 derart ineinander verschachtelt, daß sie in jedem Bereich jeweils einen im wesentlichen gleichen bzw. gleichmäßigen Abstand voneinander aufweisen. Da bei den dargestellten Ausführungsbeispielen die beiden Elektroden 11 und 12 bzw. 111 und 112 bzw. 211 und 212 bzw. 311 und 312 jeweils identischen Aufbau besitzen, reicht es an sich aus, den konstruktiven Aufbau der Elektroden anhand jeweils einer Elektrode 11 oder 12 bzw. 111 oder 112 bzw. 211 oder 212 bzw. 311 oder 312 zu beschreiben.

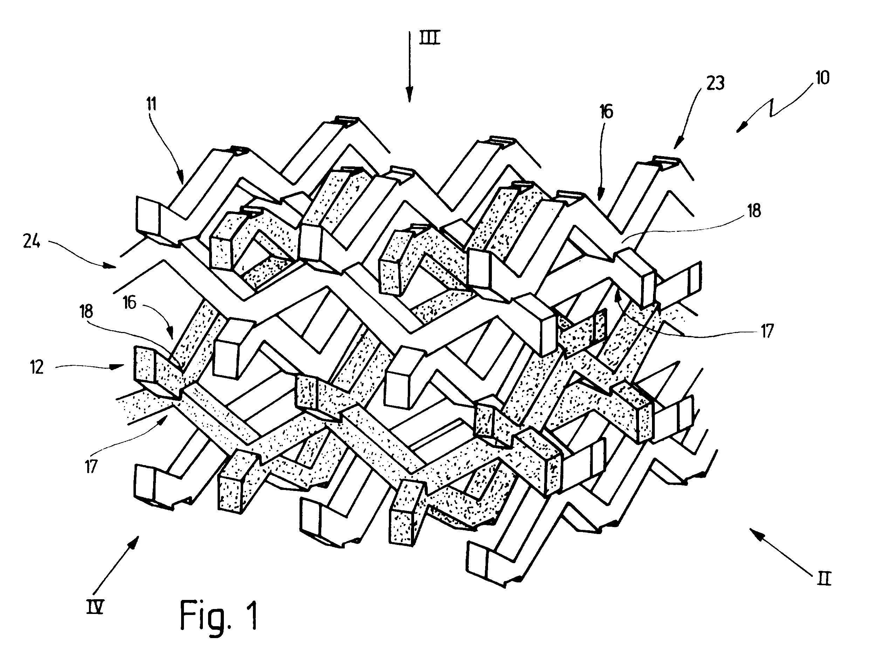

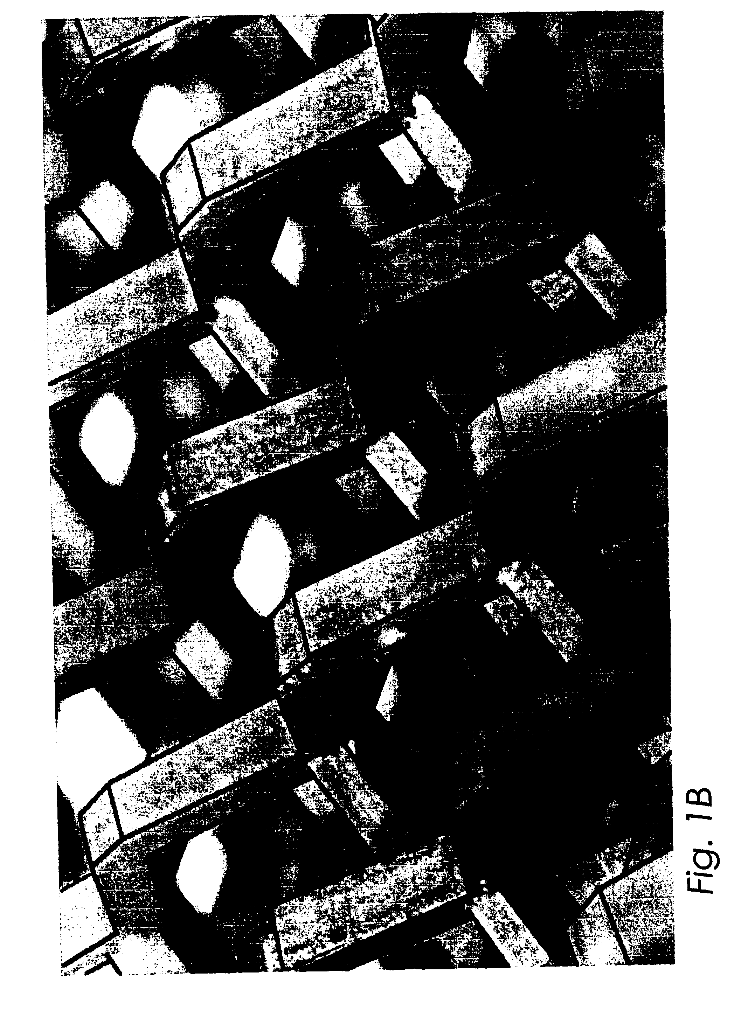

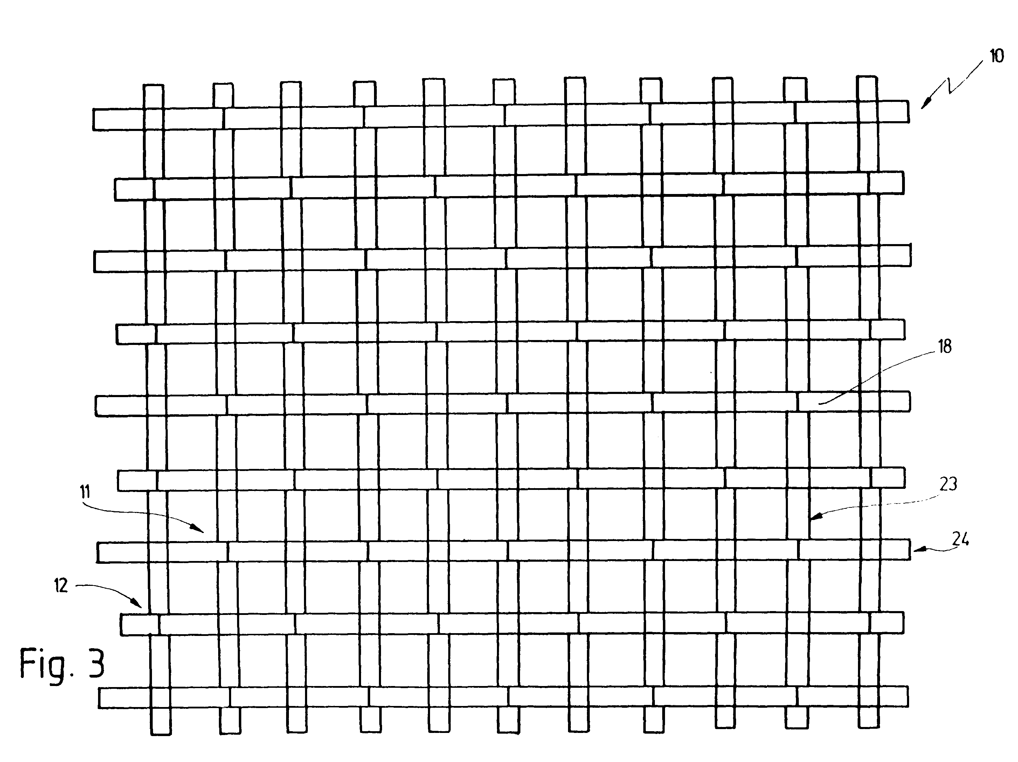

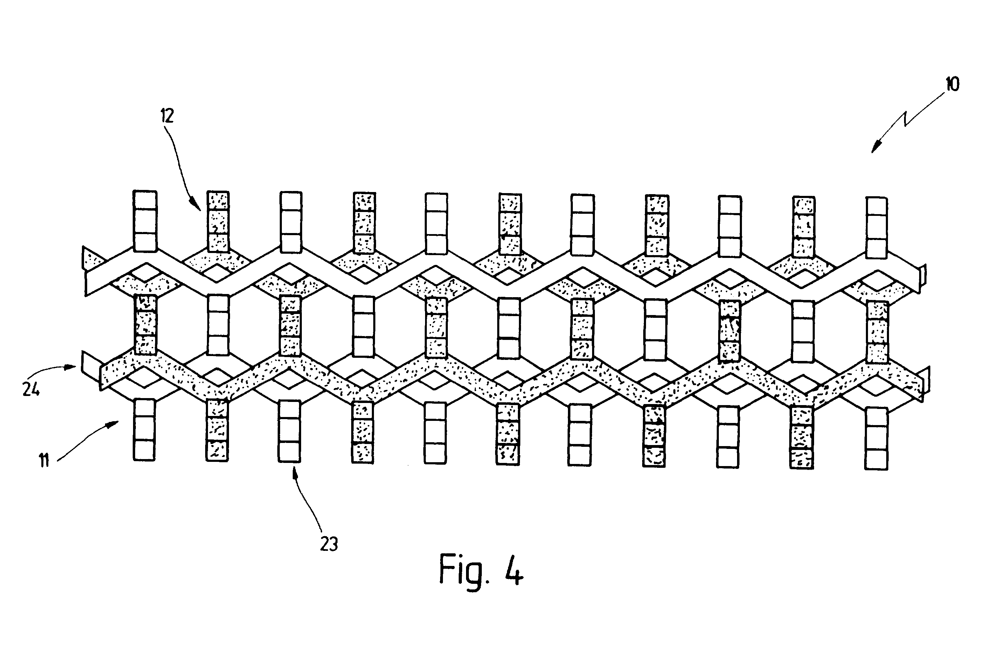

Bei dem in den Figuren 1 bis 4 dargestellten Ausführungsbeispiel der Elektrodenanordnung 10 ist die Elektrode 11 (und entsprechend vorstehendem auch die Elektrode 12) aus einer Vielzahl von Gitterelementen 15 aufgebaut, wobei gemäß Figur 1A jedes Gitterelement 15 durch zwei etwa V-förmige Elementteilpaare 16 und 17, die in zueinander senkrechten Ebenen aneinander liegen und die in einem Knotenpunkt 18 zusammenlaufend miteinander verbunden sind, gebildet ist. Jedes V-förmige Elementteilpaar 16, 17 besitzt zwei in der gleichen Ebene liegende, identisch ausgebildete stegartige Elemententeile 19 und 20 bzw. 21 und 22, die jeweils vom Knotenpunkt 18 ausgehend unter einem bestimmten Winkel a auseinanderlaufen. Das Gitterelement 15 kann als symmetrisches strahlenförmiges Gebilde angesehen werden, dessen Knotenpunkt 18 den Mittelpunkt eines Würfels und dessen stegartigen Elemententeile 19 bis 22 zu jeweils diagonalen Ecken mehrerer Würfelflächen verlaufen. Dadurch bilden die stegartigen Elemententeile 19 bis 22 der Elemententeilpaares 16 und 17 vom Knotenpunkt 18 ausgehend jeweils zwischen sich denselben Winkel und besitzen gleiche Längen. Beim dargestellten Ausführungsbeispiel ist der Querschnitt der stegartigen Elemententeile 19 und 20 bzw. 21 und 22 quadratisch; es kann jedoch jeder beliebige andere Querschnitt, bspw. ein runder oder sechseckiger Querschnitt gewählt werden. Die Enden 25 der stegartigen Elemententeile 19 bis 22 sind jeweils mit Enden benachbarter stegartiger Elemententeile weiterer Gitterelemente 15 verbunden bzw. einstückig, so daß sich die (räumlich) dreidimensionale gitterartige Struktur aus einer Vielzahl von untereinander, übereinander und nebeneinander angeordneter Gitterelemente 15 ergibt. Es versteht sich, daß die Wahl der Anzahl der Gitterelemente 15 in den drei Richtungen des Raumes von den gewünschten Außenabmessungen der Elektrodenanordnung 10 abhängig ist. Wie oben erwähnt, ist die Elektrode 12 in derselben identischen Weise aufgebaut.

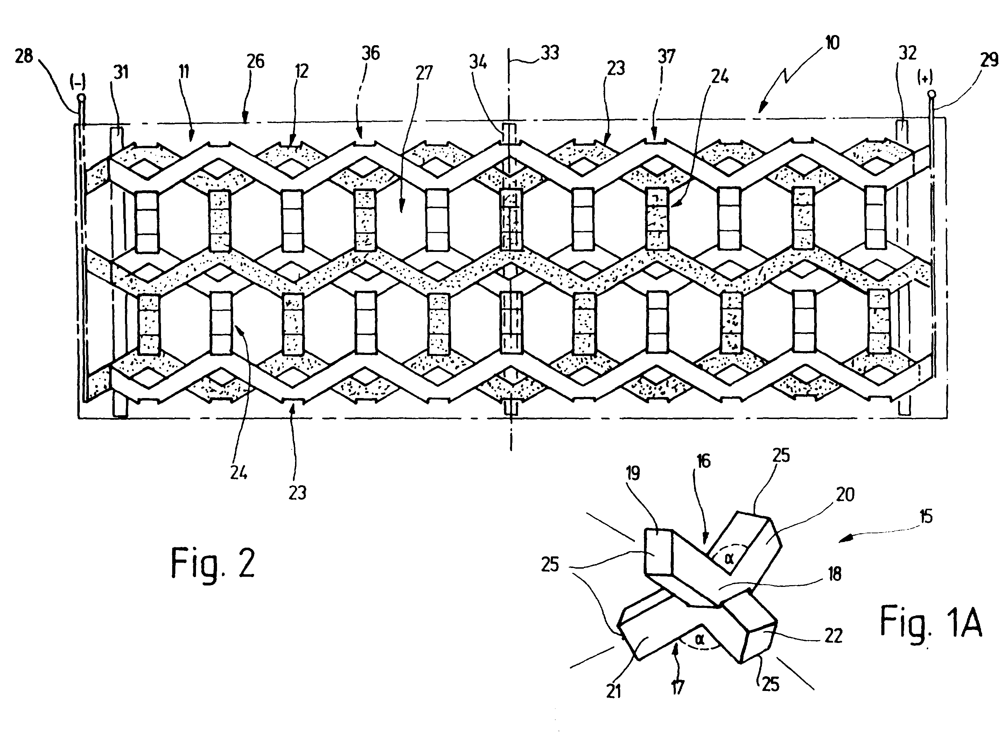

Das Ineinanderverschachteln der Elektroden 11 und 12 in allen Raumrichtungen zur Elektrodenanordnung 10 erfolgt bei diesem Ausführungsbeispiel entweder in der Weise, daß zunächst jeweils die einzelnen Gitterelemente 15 der Elektroden 11 und 12 dreidimensional ineinander verschachtelt und dann mit den jeweils ebenfalls dreidimensional ineinander verschachtelten benachbarten Gitterelemente 15 verbunden werden. Der Aufbau der Elektrodenanordnung 10 kann auch in der Weise erfolgen, daß zunächst eine Elektrode 11 oder 12 in ihrer Gitterstruktur aufgebaut wird und daß dann in einer Reihe aneinandergefügte V-förmige Elementteilpaare 16 und 17 getrennt hergestellt werden und diese als Längs- und Querreihen 23 und 24 zur Bildung der jeweils anderen Elektrode 12 oder 11 in die Gitterstruktur der einen Elektrode 11 oder 12 dreidimensional eingefädelt und anschließend miteinander verbunden werden. Um die Gitter-Elektroden 11 und 12 auf dem vorgesehenen Abstand zu halten, sind bspw. nahe gegenüberliegender Enden der Elektrodenanordnung 10, wie dies beispielhaft lediglich in Figur 2 dargestellt ist, Endscheiben 31, 32 aus elektrisch isolierendem Kunststoff gegossen, die die Stege 21 bis 22 dicht umgeben.

Zur Herstellung einer elektochemischen Anlage, wie bspw. einer Batterie oder eines Akkumulators, wird die Elektrodenanordnung 10, wie bspw. in Figur 2 strichpunktiert angedeutet, von einem Gehäuse 26 umgeben und der Innenraum 27 der Elektrodenanordnung 10 von einem flüssigen oder festen Elektrolyt ausgefüllt. Ist der Akkumulator lediglich aus einer bspw. durch vier Endscheiben 31 und 32 begrenzten Zelle gebildet, werden die beiden gitterartigen (positive und negative) Elektroden 11 und 12 jeweils mit einer elektrischen Verbindung 28 bzw. 29 versehen.

Soll die aus der Elektrodenanordnung 10 herzustellende elektrochemische Einrichtung, wie bspw. eine Batterie oder ein Akkumulator aus zwei oder mehr Zellen aufgebaut sein, so ist dies in einfacher Weise dadurch möglich, daß zumindest eine der Gitterstruktur-Elektroden 11 oder 12 in einer, zwei oder mehr Ebenen aufgetrennt wird, wie dies strichpunktiert anhand der Trennebene 33 in Figur 2 dargestellt ist, und die Enden auf Abstand gebracht werden. In dieser Trennebene 33 wird zur physikalischen bzw. elektrolytischen Trennung der beiden Zellen eine gestrichelt angedeutete Zwischenwand 34 eingebracht, die aus dem Elektrodenmaterial oder aus elektrisch isolierendem Material, bspw. Kunststoff, sein kann und die die stegartigen Elemententeile 19 bis 22 der anderen Elektrode 12 dicht umgreift und dadurch eine dichte Trennung zwischen den bspw. zwei Zellen für den Elektrolyt ergibt. Dadurch besitzt jede Akkumulatorzelle zwei Einzelelektroden 36 und 37, welche aus der Gesamtelektrode 11 gebildet sind, und die nach wie vor als Gesamtelektrode ausgebildete Elektrode 12. Es versteht sich, daß durch entsprechende elektrische Verbindungen eine elektrische Reihenschaltung der beiden Akkumulatorzellen vorgenommen wird.

Statt der in Figur 2 strichpunktiert dargestellten "vertikalen" Trennung kann auch eine "horizontale" Trennung der elektrochemischen Einrichtung in zwei oder mehr Zellen erfolgen. Werden die Elektroden 11 und 12 in der Weise gemäß Figur 2 weiter nach oben vergrößert bzw. aufgebaut, daß bspw. bei der Elektrode 12 über den oberen Längsreihen 23 eine Anordnung von Querreihen 24 fehlt und wird in dieser Ebene eine hier horizontale Trennwand aus elektrisch leitendem Material eingebracht, die in eine ohne Fehlreihe aufgebaute Elektrode 11 in allen Raumrichtungen integriert ist, ergeben sich zwei benachbarte, elektrolytisch voneinander getrennte Zellen, denen die Elektrode 11 gemeinsam ist und bei denen aus der Elektrode 12 zwei Einzelelektroden entstanden sind.

Durch einen derartigen schichtweisen Aufbau kann die Trennwand (oder Trennwände) aus demselben Material wie die betreffende Elektrode sein, so daß sich die Dichtheit von selbst ergibt und gleichzeitig die Trennwand als aktive Oberfläche zur Verfügung steht.

Es versteht sich, daß auch die jeweils andere Elektrode aufgetrennt oder gar beide in entsprechender Weise aufgetrennt sein können. Bei mehreren Einzelzellen eines Akkumulators ist es zweckmäßig, beide Elektroden 11 und 12 derart aufzutrennen, daß die Trennebenen der einzelnen Elektroden 11 und 12 jeweils versetzt zueinander angeordnet sind, so daß jeweils eine der Einzelelektroden zwei benachbarten Zellen zugeordnet ist.

Der Werkstoffaufbau der Gitterelemente 15 bzw. der Elektroden 11 und 12 kann in an sich bekannter Weise erfolgen. Beispielsweise können die Gitterelemente 15 aus Kunststoff geformt und mit einem entsprechenden, für elektrochemische Einrichtungen geeigneten Metall beschichtet sein. Es ist aber auch möglich, die einzelnen Gitterelemente 15 aus Blei zu formen und bspw. eine der Elektroden durch eine Planté-Beschichtung zu präparieren. Unabhängig vom verwendeten Material ergibt die Gitterstruktur der Elemente 11 und 12 eine relativ hohe und allen Anforderungen gerecht werdende mechanische Festigkeit der Elektrodenanordnung 10 bzw. der daraus entstehenden elektrochemischen Einrichtung.

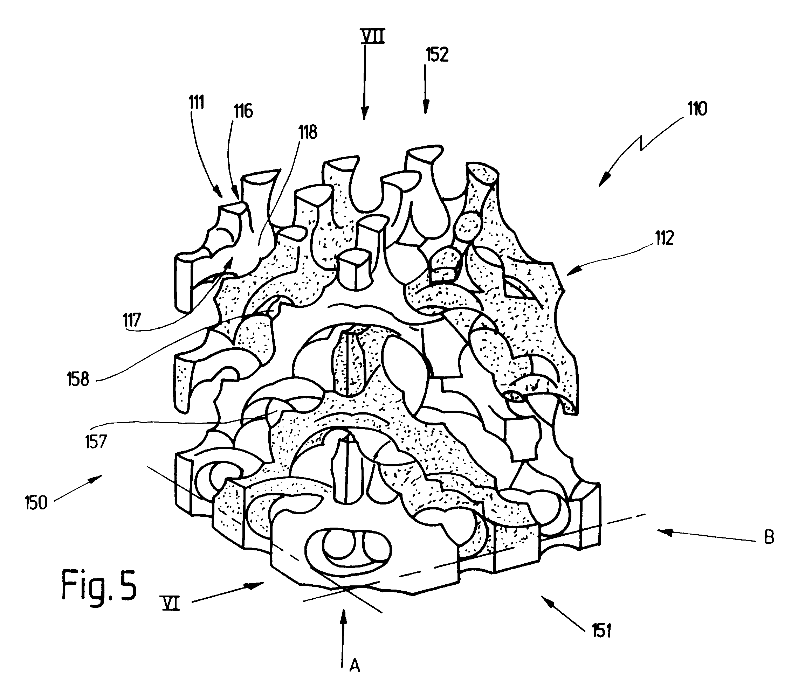

Bei dem in den Figuren 5 bis 7 dargestellten Ausführungsbeispiel der Elektrodenanordnung 110 ist die dreidimensional gitterartige Struktur der Elektroden 111 und 112 zwar ebenfalls in gleichförmiger Ausgestaltung und jeweiliger Aneinanderreihung einzelner aus stegartigen Elementteilen 119 bis 122 aufgebauter Gitterelemente 115 gebildet, deren an die Knotenpunkte 118 ansetzende V-förmige Elementteilpaare 116 und 117 aufgrund des besonderen Herstellungsvorganges im Querschnitt jedoch nicht gleichmäßig sind.

Bei diesem Ausführungsbeispiel wird die Elektrodenanordnung 110 bspw. aus einem langgestreckten quaderförmigen Material, wie einem Stangenmaterial hergestellt. Je nach zu erreichender Endform der elektrochemischen Einrichtung kann aber das Ausgangsmaterial bzw. der Rohkörper eine an diese gewünschte Endform angepaßte Raumform beliebiger Art und Größe, also auch jeglicher unregelmäßiger Form besitzen. Zur einfacheren Darstellung sei die Herstellung der Elektrodenanordnung 110 anhand eines Würfels beschrieben.

Der Würfel wird von drei zueinander senkrechten Seiten, bspw. von den Seiten 150, 151 und 152 mit jeweils mehreren Reihen 153 und 154 von durchgehenden Bohrungen versehen. Dabei sind von jeder Seite 150 bis 152 die benachbarten Bohrungsreihen 153 und 154 derart mit Bohrungen 155 und 156 versehen, daß die Bohrungen 155 und 156 benachbarter Bohrungreihen 153 und 154 zueinander versetzt angeordnet sind. Mit anderen Worten, die Bohrungen 155, 156 jeweils benachbarter Bohrungsreihen 153, 154 liegen in diagonaler Richtung jeder Würfelseite gesehen ebenfalls in einer Reihe. Dadurch durchdringen sich die einzelnen jeweils durchgehenden Bohrungen 155 und 156 aller drei Seiten 150 bis 152 in entsprechend versetzter Weise. Desweiteren werden von zwei zueinander senkrechten diagonalen Richtungen A und B her, d.h. unter einem Winkel von 45° zur Seite 150 und 151 einerseits und zur Seite 150 und einer der Seite 151 gegenüberliegenden Seite 162 andererseits Bohrungen 157 und 158 in mehreren parallelen Reihen eingebracht, wobei auch die Reihen der einen diagonalen Richtung A zu denen der anderen diagonalen Richtung B versetzt zueinander angeordnet sind.

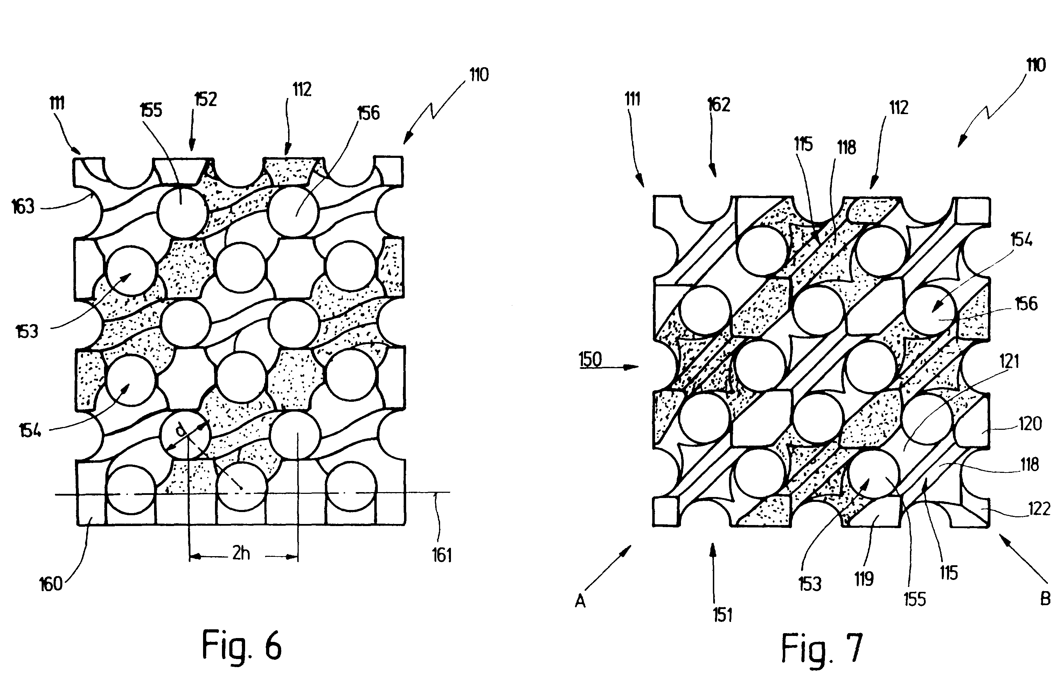

Unter einer bestimmten Bedingung reicht es aus, den Ausgangs- bzw. Rohkörper von zwei zueinander senkrechten Ebenen und von zwei zueinander senkrechten diagonalen Richtungen, bspw. den Richtungen A und B zu bohren, nämlich dann, wenn der Bohrungsdurchmesser so groß ist, daß sich die Elektroden noch voneinander trennen. Voraussetzung dabei ist, daß die Bohrungen jeweils gleichen Durchmesser d besitzen. Mit anderen Worten, es muß gelten d > h √2, wobei h der halbe Abstand der Mittelpunkte zweier über einen Knoten 118 hinweg benachbarter Bohrungen 155, 156, ist (Figur 6). Ist dagegen d wesentlich kleiner, muß von noch mehr Seiten bzw. Diagonalen aus gebohrt werden.

Dadurch ergeben sich die gitterartigen Elektroden 111 und 112, die voneinander getrennt und in gleichmäßigem Abstand durch Seitenwandscheiben zusammengehalten sind, von denen lediglich die Seitenwand- bzw. hier Bodenscheibe 160 in den Figuren 5 und 6 noch ersichtlich ist. Die anderen Seitenwandscheiben sind bereits derart abgeschnitten, daß an den Seiten der noch als Rohling zu bezeichnenden Elektrodenanordnung 110 halbzylindrische Bohrungsteile 163 verbleiben.

Wie erwähnt, haben die Stege 119 bis 122 der Gitterelemente 115 einen gleichförmig sich ändernden Querschnitt. Eine Vergleichmäßigung des Querschnitts kann dadurch erreicht werden, daß weitere Bohrungsreihen unter 45° zur Oberseite 152 aus einer oder zwei zueinander senkrechten Richtungen eingearbeitet werden. Auf diese Weise kann auf eine Vereinheitlichung des Abstandes der Elektroden 111 und 112 in allen Bereichen hingearbeitet werden.

Würde auch die Bodenscheibe 160 in der strichpunktiert dargestellten Ebene 161 abgetrennt werden, so könnten sich die beiden Gitterstruktur-Elektroden 111 und 112 in ihrer ineinander verschachtelten Anordnung relativ zueinander bewegen. Um dies zu verhindern, wird die Bodenscheibe 160 erst dann abgetrennt, wenn zum Aufbau einer elektrochemischen Einrichtung, bspw. einer Batterie oder eines Akkumulators an mindestens einem Ende eine elektrisch isolierende Endscheibe (entsprechen den Endscheiben 31, 32 der Figur 2) angebracht ist, die die beiden in allen Raumrichtungen bzw. dreidimensional ineinander geschachtelten Elektroden 111 und 112 mechanisch sicher und auf dem vorgegebenen Abstand hält.

Ein entsprechender Akkumulator wird in einer beim Ausführungsbeispiel der Figuren 1 bis 4 dargestellten Weise aus der Elektrodenanordnung 110 gebildet, indem in nicht dargestellter Weise ein Gehäuse die Elektrodenanordnung 110 umgibt, die an mindestens zwei einander zugewandten Seiten mit der elektrisch isolierenden Endscheibe versehen ist. Es versteht sich, daß auch hier eine elektrische Verbindungsanordnung aus dem Gehäuse herausgeführt ist, die elektrisch getrennt mit der einen Elektrode 111 und mit der anderen Elektrode 112 verbunden ist.

Auch bei diesem Ausführungsbeispiel ist es ohne weiteres möglich, die elektrochemische Einrichtung in zwei oder mehr Zellen dadurch zu unterteilen, daß die Gitterstruktur-Elektrode 111 und/oder 112 in einer gewünschten Ebene durch mechanische Auftrennung in Einzelelektroden elektrisch getrennt ist. In entsprechender Weise können Zwischenwände zum Abtrennen der zwei oder mehr Zellenräume vorgesehen sein.

Bei diesem Ausführungsbeispiel ist es zweckmäßig, als Ausgangsmaterial ein für elektrochemische Einrichtungen geeignetes Metall, bspw. Blei vorzusehen, wobei dann eine der Elektroden 111 oder 112 mit einer Planté-Beschichtung versehen wird. Es ist aber auch möglich, die Gitterstruktur der Elektroden 111 und 112 zunächst aus einem anderen Material, wie Kunststoff herzustellen, das dann mit einer entsprechenden für die elektrochemische Einrichtung geeigneten Material beschichtet wird.

Bei beiden Ausführungsbeispielen können die Endwände aus einem Kunststoff, der die entsprechenden chemischen Eigenschaften aufweist (Säurebeständigkeit, Festigkeit) hergestellt werden. Anbringen läßt sich die Endwand, indem die Elektrodenanordnung, deren Elektroden noch Abstandshalter oder mit den nicht abgetrennten Seitenwänden verbunden und damit fixiert sind, soweit in eine Flüssigkeit getaucht wird, daß die Flüssigkeitsoberkante sich an der nunmehr untenliegenden Kante der zu erzeugenden Endwand befindet. Auf diese Flüssigkeit wird das Kunststoffmaterial für die Wand aufgegossen. Sind die Wände an den Kopfenden erzeugt worden, können die Seitenwände bzw. Abstandshalter abgetrennt bzw. entfernt werden. Durch die eingebrachten Kunststoffwände sind die Teilelektroden bereits fixiert. Da an die Seiten Kunststoffwände gegossen sind, können die Kopfenden der so entstandenen Anordnung jeweils mit der einen und mit der anderen Elektrode verbunden werden; sie stellen so die beiden Pole der Zellenkette bzw. Zelle dar.

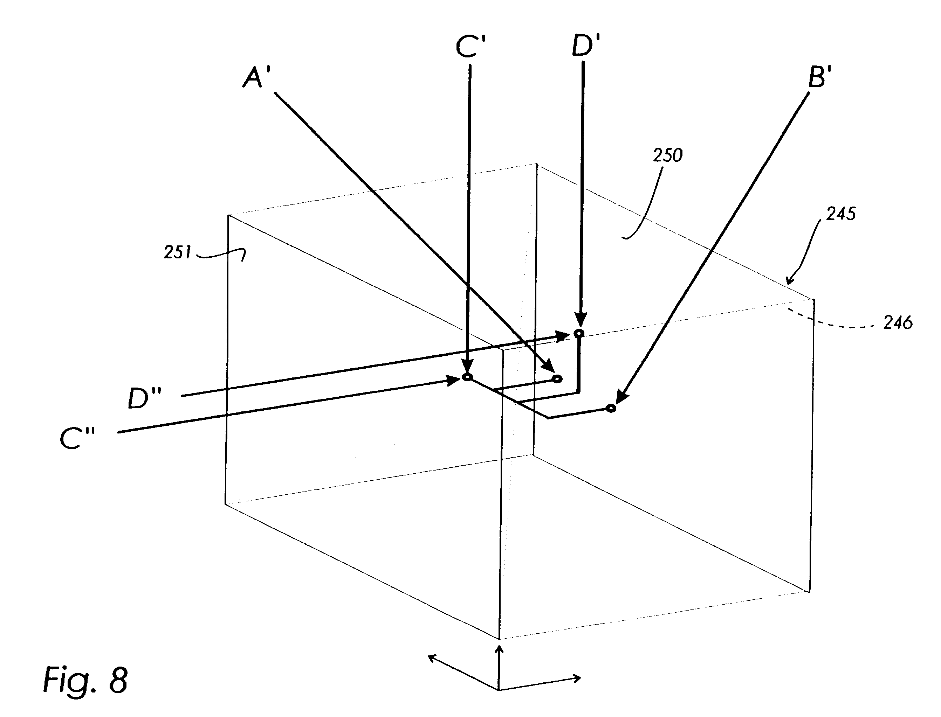

Bei dem in den Figuren 8 bis 12 dargestellten dritten Ausführungsbeispiel einer Elektrodenanordnung 210 ist die gitterartige Struktur der Elektroden 211 und 212 ebenfalls in gleichförmiger Ausgestaltung und jeweiliger Aneinanderreihung einzelner aus stegartigen Elemententeilen 219 bis 222 aufgebauter Gitterelemente 215 gebildet, deren an die Knotenpunkte 218 ansetzende V-förmige Elementteilpaare 216 und 217 aufgrund eines vom Ausführungsbeispiel der Figuren 5 bis 7 etwas unterschiedlichen Herstellungsvorganges im Querschnitt gleichmäßig sind, wie dies beim Ausführungsbeispiel der Figuren 1 bis 4 vorgesehen ist und aus Figur 10 hervorgeht.

Bei diesem dritten Ausführungsbeispiel wird die Elektrodenanordnung 210 wie die Elektrodenanordnung 110 der Figuren 5 bis 7 aus einem Rohkörper beliebiger Raumform und Größe hergestellt. Der Einfachheit halber ist dies an dem quaderförmigen Rohkörper 245 nach Figur 8 dargestellt.

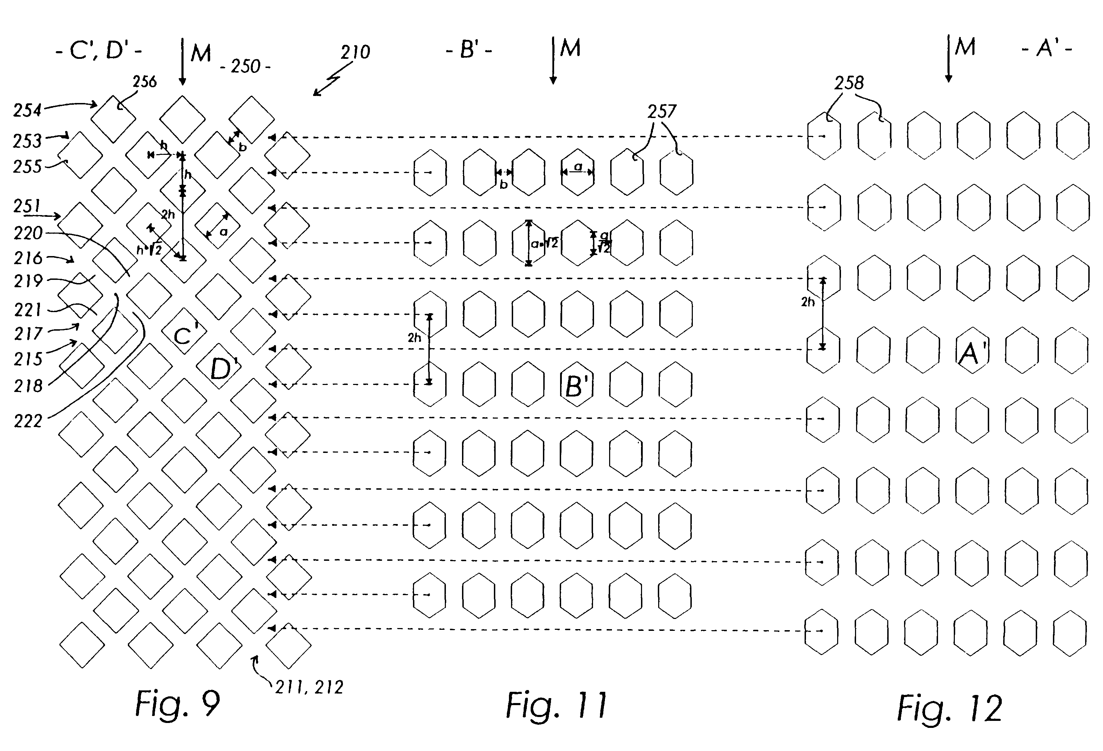

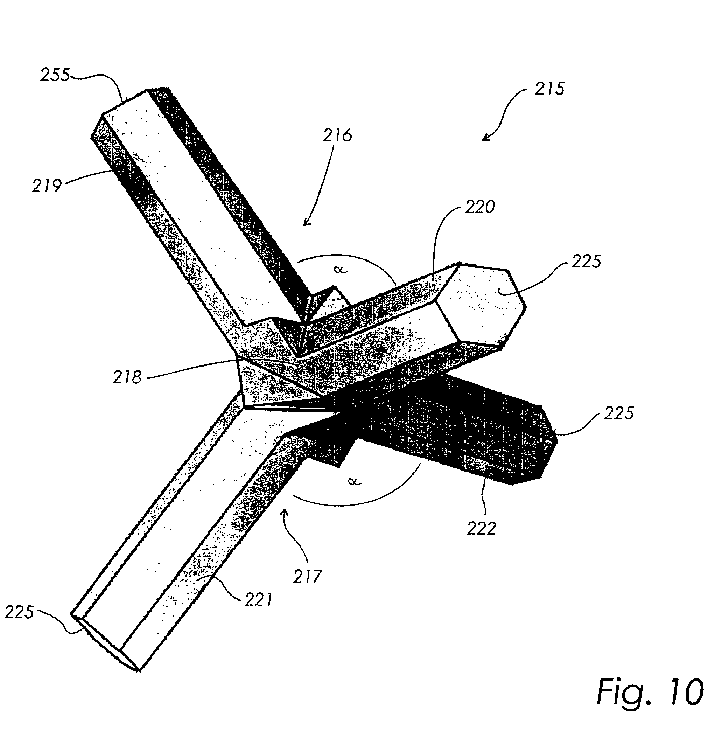

Der quaderförmige Rohkörper 245 wird von zwei zueinander senkrechten Seiten 250 und 251 gemäß den Richtungen C' und D' bzw. C" und D" mit jeweils mehreren Reihen 253 und 254 durchgehender Ausnehmungen 255 und 256, die hier quadratisch sind, versehen (vgl. Figur 9, die auch die Ansicht aus der Richtung C", D" auf die Fläche 251 darstellt). Dabei sind von jeder Seite 250 und 251 die benachbarten Ausnehmungsreihen 253 und 254 derart mit quadratischen Ausnehmungen 255 und 256 versehen, daß die Ausnehmungen 255 und 256 benachbarter Ausnehmungsreihen 253 und 254 zueinander versetzt angeordnet sind. Desweiteren werden wie beim zweiten Ausführungsbeispiel gemäß den Figuren 5 bis 7 von zwei zueinander senkrechten diagonalen Richtungen A' und B' her, d.h. unter einem Winkel von 45° zur Seite 250 und 251 einerseits und zur Seite 250 und einer der Seite 251 gegenüberliegenden Seite andererseits Ausnehmungen 257 und 258 in mehreren parallelen Reihen eingebracht, wobei auch die Reihen der einen diagonalen Richtung A' zu denen der anderen diagonalen Richtung B' versetzt zueinander angeordnet sind, wie dies aus den Figuren 11 und 12 hervorgeht. Diese Ausnehmungen 257 und 258 sind sechseckförmig ausgebildet. Alle diese Ausnehmungen 255 bis 258 sind bspw. mittels eines Lasers in den Rohkörper 245 eingeschnitten.

Durch diese Anordnung der Ausnehmungen 255 bis 258 ergeben sich, wie die Figuren 9, 11 und 12 zeigen, die einzelnen Knoten 218 und die davon ausgehenden Stege 219 bis 222, die im Querschnitt eine, bis auf die den Knotenpunkten 218 unmittelbar benachbarten Bereichen, regelmäßige Sechseckform (Figur 10) besitzen. Auch bei diesem dritten Ausführungsbeispiel wird die Mindestzahl der Ebenen bzw. Richtungen, aus denen die Ausnehmungen 255 bis 258 eingearbeitet werden müssen, durch die Querschnittsfläche der Ausnehmungen bestimmt. Ist bspw. eine Seite der quadratischen Ausnehmungen 255 und 256 mit a bezeichnet und haben die sechseckigen Bohrungen 257 und 258 eine Schmalseite mit der Größe a, so ergibt sich bei einem halben Abstand h der Ausnehmungsmitten zweier über einen Knoten 218 benachbarter Ausnehmungen 255 (Figur 9) die Maßgabe, daß gelten muß: a > h / √2. Die Verbindungslinien zwischen der Figur 9 und den Figuren 11 und 12 zeigen einerseits die versetzte Anordnung der Ausnehmungen 255 bis 258 und andererseits die Zuordnung der Mittelpunkte der Ausnehmungen 255 bis 258 zu den Mitten der Stege 219 bis 222. In allen drei Raumachsen erfolgt von einer Ausnehmung zur jeweils benachbarten derselben Richtung A', B', C', D', C" bzw. D" ein Vorschub von 2·h. Desweiteren zeigen die Pfeile M in den Figuren 9, 11 und 12 die angenommene Mitte der mit in allen Raumrichtungen ineinanderverschachtelt versehenen Elektroden 211 und 212 der Elektrodenanordnung 210.

Bei diesem Ausführungsbeispiel wird das Trennen der Elektroden 211 und 212 voneinander bevorzugt in der Weise durchgeführt, daß die Seiten des Rohkörpers in Fortsetzung der Ausnehmungen 255 bis 258 mit entsprechenden halbierten Ausnehmungen versehen werden, was zu einer Trennung der Elektroden führt, was auch anhand der Figur 6 des zweiten Ausführungsbeispiels deutlich wird, wenn dort die Seitenwandscheibe 160 nicht abgeschnitten sondern mit halben Bohrungen an entsprechenden Stellen versehen werden würde. Das Vorsehen von e lektrolytisch trennenden Zwischenwänden im Rohkörper nach dem dritten Ausführungsbeispiel der Figuren 8 bis 12 kann dort in der Weise erfolgen, daß in einer für die Trennwand bestimmten Ebene des Rohkörpers 245 keinerlei Ausnehmungen 255 bis 258 vorgesehen werden. Dies ist durch Laserschneidtechnik ohne weiteres möglich. Die dazu vorzunehmende Trennung zumindest einer der Elektroden 211, 212 wird bei diesem Ausführungsbeispiel durch Abtrennen bestimmter Stege dieser Elektrode vorgenommen.

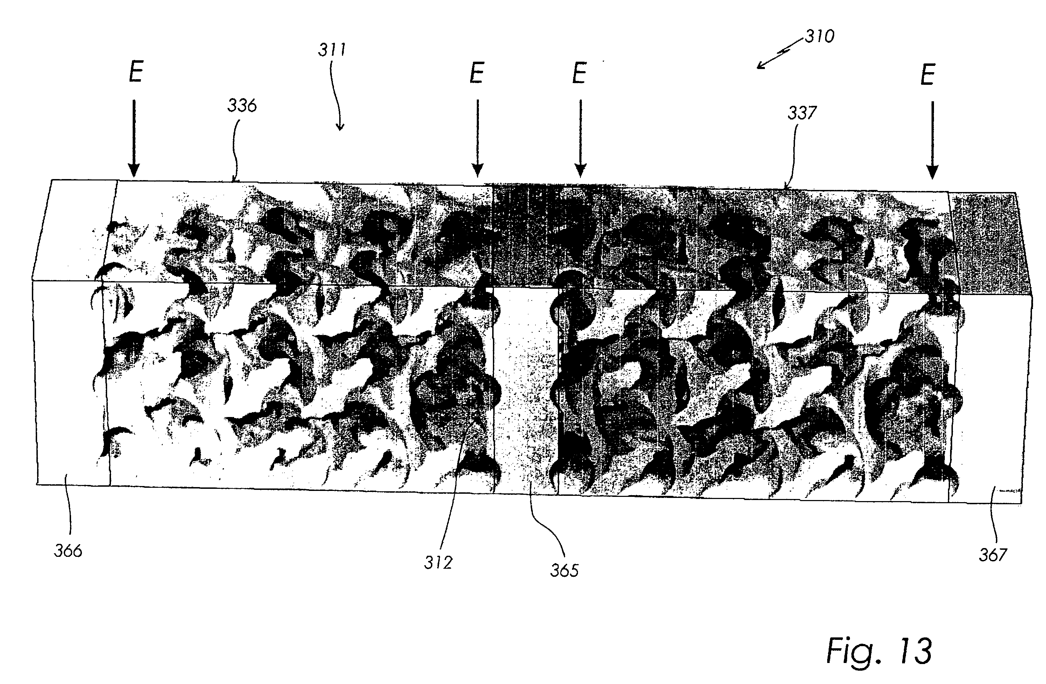

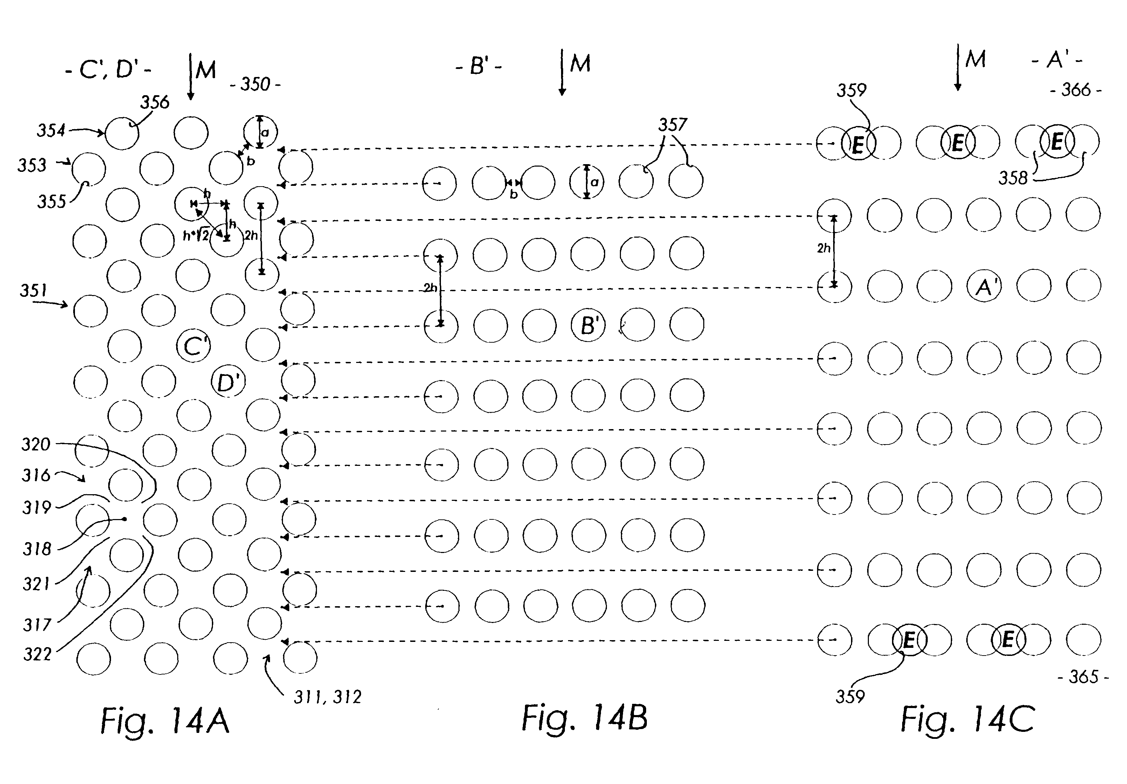

Auch bei diesem dritten Ausführungsbeispiel kann ebenso wie beim noch zu beschreibenden vierten Ausführungsbeispiel nach den Figuren 13 und 14 das Ausgangsmaterial des Rohkörpers 245 beliebiger Art sein, wie dies bereits anhand des zweiten Ausführungsbeispiels beschrieben worden ist.

Beim dritten Ausführungsbeispiel vorliegender Erfindung können die einzelnen Ausnehmungen auch in der Weise hergestellt werden, daß der Rohkörper 245 gemäß Figur 8 nach dem Herstellen der Ausnehmungen in den Richtungen C', D' und C", D" zu beiden Seiten einer gedachten, hier punktiert eingezeichneten Diagonalen 246 eingespannt und um diese Diagonale in drei Schritten in einem Winkelabstand von jeweils 120° gedreht wird. Nach jeder 120°-Drehung werden die Ausnehmungen gemäß den Richtungen A' und B' eingearbeitet. Erfolgt diese Art der Einarbeitung der Ausnehmungen mit zylindrischen Ausnehmungen in Form von Bohrungen, ergibt sich eine Vergleichmäßigung des Durchmessers bzw. des Außenumfanges der stegartigen Elemententeile 219 bis 222 zwischen den Knotenpunkten 218.

Bei dem in Figur 13 und den Teilfiguren 14A bis C dargestellten vierten Ausführungsbeispiel einer Elektrodenanordnung 310 ist die gitterartige Struktur der Elektroden 311 und 312 entsprechend dem Ausführungsbeispiel der Figuren 5 bis 7 ausgebildet. Mit anderen Worten, bei dem vierten Ausführungsbeispiel sind die Ausnehmungen 355 bis 358 der Ausnehmungsreihen 353 und 354 durch im Querschnitt zylindrische Bohrungen gebildet. Der wesentliche Unterschied dieses vierten Ausführungsbeispieles 310 gegenüber dem genannten zweiten Ausführungsbeispiel liegt in dem mehrzelligen Aufbau der durch die Elektrodenanordnung 310 gebildeten elektrochemischen Einrichtung.

Der Ausgangskörper ist auch hier ein langgestreckter Quader, ähnlich dem Rohkörper 245 der Figur 8. Entsprechend dem dort dargestellten Bohrschema werden die Reihen 353, 354 der zylindrischen Ausnehmungen 355 bis 358 in den dort dargestellten Richtungen A', B', C', D', C" bzw. D" eingearbeitet. Diese Ausnehmungsreihen sind so gesetzt, daß sich, wie aus Figur 13 hervorgeht, Endwände 366 und 367 und eine Zellentrennwand 365 ergeben. Die Zellentrennwand 365 ergibt sich dadurch, daß ein relativer Leervorschub zwischen dem Werkzeug zum Herstellen der Ausnehmungsreihen und dem Werkstück (Rohkörper) um mindestens 3h erfolgt. Entsprechendes gilt bei der Herstellung der Endwände 366 und 367, die wegen ihrer ebenen Außenfläche dünnwandiger ausgeführt sein können.

Zum Trennen der Elektroden 311 und 312 voneinander und zum Auftrennen der einen Elektrode 311 in zwei Einzelelektroden 336 und 337 werden aus einer zur Richtung A' (Figur 8) parallelen Richtung E (Figur 14C) zu beiden Seiten der Zellentrennwand 365 und am Innenseitenbereich der Endwände 366 und 367 zylindrische Trennausnehmungen 359 und 359' eingearbeitet, die jeweils zwischen zwei benachbarten Bohrungen 358 benachbarter Bohrungspaare angeordnet sind und diese Bohrungen 358 schneiden. Aus Figur 14C ist deutlich zu ersehen, daß mit dem Einarbeiten der Trennbohrungen 359 und 359' die zwischen benachbarten Bohrungen 358 verbliebenen Stege 319 bis 322 ausgearbeitet werden bzw. verschwinden. Dabei sind gemäß Figur 14C die Trennbohrungen 359' gegenüber den Trennbohrungen 359 dann versetzt, wenn eine gerade Anzahl von Reihen an Bohrungen 358 zwischen den mit den Trennbohrungen versehenen Bohrungsreihen liegt. Auf diese Weise ergeben sich gemäß Figur 13 links und rechts die die Endwand 366 bzw. 367 beinhaltende Einzelelektroden 336 und 337 der Elektrode 311 und die Elektrode 312, die in ihrem mittigen Bereich die Zelltrennwand 365 besitzt, zu deren beiden Seiten die gitterartigen Strukturen in allen drei Raumrichtungen mit der gitterartigen Struktur der Einzelelektrode 336 bzw. der der Einzelelektrode 337 ineinander verschachtelt sind. Im übrigen ist die Figur 14 in allen weiteren Details und der Anordnung der Ausnehmungen (Bohrungen) mit den Figuren 9, 11 und 12 unmittelbar vergleichbar, wobei die Figur 14 ebenfalls gleichzeitig die Ansicht aus der Richtung C", D" auf die Fläche 351 darstellt.

Bei den dargestellten Ausführungsbeispielen der Elektrodenanordnung 10, 110, 210, 310 wird das Verhältnis des Elektrodenvolumens zum Volumen der Zelle und damit des Elektrolyten durch das Verhältnis von Stegquerschnitt bzw. Stegdurchmesser zur Steghöhe bzw. -länge bestimmt. Durch die geometrisch gleichmäßige Form der beiden Elektroden 11 und 12 bzw. 111 und 112 bzw. 211 und 212 bzw. 311 und 312 wird der gesamte Raum der Zelle bzw. jeder Zellen gleichmäßig und zu gleichen Teilen von beiden Elektroden eingenommen. Dadurch ist der Anteil an reaktivem Teil der Elektroden im Vergleich zum verbleibenden Trägeranteil sehr groß. Durch die Reduzierung des nicht aktiven Materials der Elektroden ergibt sich eine Verringerung des Gewichts, eine gleichmäßige Form der Elektrode und eine gleichmäßige Stromdichte. Durch die Vergrößerung der Oberfläche aufgrund der möglichen Kleinheit der Lochung, bzw. der Gitterstrukturen ist eine hohe Stromentnahme möglich.

Herstellungsbedingt ergibt sich insbesondere bei dem zweiten, dritten und vierten Ausführungsbeispiel der Elektrodenanordnung 110, 210 bzw. 310 ein für die Stromabnahme flächiger Abgriff.

Wesentlich an der Elektrodenanordnung 10 bzw. 110 bzw. 210 bzw. 310 ist die räumlich dreidimensional gitterartige Struktur aus den in allen Raumrichtungen ineinander verschachtelt angeordneten Elektroden, wobei auch unsymmetrische Gitterstrukturen möglich sind.

Wenn auch im Vorstehenden nicht im einzelnen auf die elektrochemische Seite einer elektrochemischen Einrichtung detailliert Bezug genommen worden ist, versteht es sich, daß die Elektrodenanordnung 10 bzw. 110 bzw. 210 bzw. 310 und die daraus hergestellte elektrochemische Einrichtung in entsprechender Weise präpariert und mit den entsprechenden Elementen, wie Elektrolyt, elektrische Verbindungen und dgl. nicht nur konstruktiv sondern auch werkstoffmäßig in herkömmlicher Weise versehen sind.

## Patentansprüche

1. Elektrodenanordnung (10, 110, 210, 310) für Zellen von Batterien, Akkumulatoren oder dgl. elektrochemische Einrichtungen, mit mindestens einer negativen Elektrode (11, 12; 111, 112; 211, 212; 311, 312) und mindestens einer positiven Elektrode (12, 11; 112, 111; 212, 211; 312, 311), die in einem bestimmten Abstand zueinander gehalten sind, dadurch gekennzeichnet, daß die beiden Elektroden (11, 12; 111, 112; 211, 212; 311, 312) je eine dreidimensional gitterartige Struktur aufweisen und in allen Raumrichtungen ineinander verschachtelt angeordnet sind.

2. Elektrodenanordnung nach Anspruch 1, **dadurch gekennzeichnet,** daß die beiden Elektroden (11, 12; 111, 112; 211, 212; 311, 312) identische Struktur aufweisen und vorzugsweise im wesentlichen auf gleichem Abstand gehalten sind.

3. Elektrodenanordnung nach Anspruch 1 oder 2, dadurch gekennzeichnet, daß jede Elektrode (11, 12; 111, 112; 211, 212; 311, 312) durch mehrere dreidimensionale Gitterelemente (15; 115; 215; 315) aus von einem Knoten (18; 118; 218; 318) in zwei zueinander senkrechten Ebenen verlaufenden, etwa V-förmigen, stegartigen Elementteilpaaren (16, 17; 116, 117; 216, 217) gebildet ist.

4. Elektrodenanordnung nach Anspruch 3, dadurch gekennzeichnet, daß die etwa V-förmigen, stegartigen Elementteilpaare (16, 17; 116, 117; 216, 217) an ihren jeweiligen Enden (25) zumindest teilweise mit weiteren Elemententeilpaaren bzw. Gitterelementen nebeneinander und/oder übereinander verbunden sind.

5. Elektrodenanordnung nach Anspruch 3 oder 4, dadurch gekennzeichnet, daß die Elementteile der Elementteilpaare (16, 17; 116, 117; 216, 217) durch Stege (19 bis 22; 119 bis 122; 219 bis 222) mit über die Länge gleich- oder ungleichförmigem Querschnitt gebildet sind.

6. Elektrodenanordnung nach mindestens einem der Ansprüche 1 bis 5, dadurch gekennzeichnet, daß die dreidimensionale gitterartige Struktur der Elektroden (11, 12) abschnittsweise dreidimensional ineinandergeschachtelt aufgebaut ist.

7. Elektrodenanordnung nach mindestens einem der Ansprüche 1 bis 5, dadurch gekennzeichnet, daß die dreidimensionale gitterartige Struktur der Elektroden (111, 112) durch zueinander versetzte durchgehende Ausnehmungen (155 bis 158; 255 bis 258; 355 bis 358) in mindestens zwei zueinander senkrechten Ebenen (150, 151; 250, 251; 350, 351) und mindestens in zwei dazu um 45° verdrehten Ebenen (A, B) in einem Rohkörper (245) gebildet ist.

8. Elektrodenanordnung nach Anspruch 7, dadurch gekennzeichnet, daß die Ausnehmungen (155 bis 158) durch Bohrungen gebildet sind.

9. Elektrodenanordnung nach Anspruch 7, dadurch gekennzeichnet, daß die Ausnehmungen (255 bis 258) durch quadratische Ausnehmungen aus zwei zueinander senkrechten Richtungen (C', D'; C", D") und durch sechseckige Ausnehmungen aus zwei zueinander senkrechten diagonalen Richtungen (A, B; A', B') gebildet und vorzugsweise lasergeschnitten sind.

10. Elektrodenanordnung nach mindestens einem der Ansprüche 7 bis 9, dadurch gekennzeichnet, daß die Trennung der Elektroden (111, 112; 211, 212; 311, 312) durch zumindest teilweises Abtrennen einer Wandscheibe an allen Seiten des Rohkörpers (245) gebildet ist.

11. Elektrodenanordnung nach mindestens einem der Ansprüche 7 bis 9, dadurch gekennzeichnet, daß die Trennung der Elektroden (111, 112; 211, 212; 311, 312) durch bspw. bohrendes oder bspw. laserschneidendes Entfernen bestimmter Stege bzw. durch Herstellen von Trennausnehmungen (359, 359') zwischen den beiden Elektroden erfolgt.

12. Elektrodenanordnung nach mindestens einem der Ansprüche 1 bis 11, dadurch gekennzeichnet, daß die gitterartige Struktur aus Kunststoff und mit einer entsprechenden Beschichtung versehen ist.

13. Elektrodenanordnung nach mindestens einem der Ansprüche 1 bis 11, dadurch gekennzeichnet, daß die gitterartige Struktur aus einem geeigneten Metall ist.

14. Aus einer Elektrodenanordnung (10; 110; 210; 310) nach mindestens einem der vorhergehenden Ansprüche aufgebaute elektrochemische Einrichtung, wie Batterie, Akkumulator oder dgl. mit zwei oder mehr Zellen, dadurch gekennzeichnet, daß mindestens eine der gitterartigen Strukturen der Elektroden (11, 12; 111, 112; 211, 212; 311, 312) in einer Ebene durchtrennt ist.

15. Elektrochemische Einrichtung nach Anspruch 14, dadurch gekennzeichnet, daß die jeweils andere der gitterartigen Strukturen der Elektroden (12, 11; 112, 111; 212, 211; 312, 311) in der Trennebene (33) der einen gitterartigen Struktur mit einer elektrolytisch trennenden Zwischenwand (34) versehen ist.

16. Elektrochemische Einrichtung nach Anspruch 15, dadurch gekennzeichnet, daß die Zwischenwand durch Einbau oder Eingießen einer entsprechend geformten Platte gebildet ist.

17. Elektrochemische Einrichtung nach Anspruch 15, dadurch gekennzeichnet, daß die Zwischenwand (365) dadurch gebildet ist, daß in einer entsprechenden Ebene des Rohkörpers (245) keine Bohrungen bzw. Ausnehmungen eingebracht sind.

18. Elektrochemische Einrichtung nach Anspruch 17, dadurch gekennzeichnet, daß die Zwischenwand (365) Teil der einen Elektrode (312, 311) und die andere Elektrode (311, 312) der Zwischenwand (365) zu beiden Seiten benachbart von dieser vorzugsweise mittels Trennausnehmungen (359) abgetrennt ist.

19. Elektrochemische Einrichtung nach mindestens einem der Ansprüche 14, 17 oder 18, dadurch gekennzeichnet, daß die gitterartige Struktur der beiden Elektroden (11, 12; 111, 112; 311, 312) in jeweils zueinander im Abstand angeordneten Ebenen getrennt ist.

20. Verfahren zum Herstellen einer elektrochemischen Einrichtung, wie Batterie, Akkumulator oder dgl. aus einer Elektrodenanordnung nach mindestens einem der Ansprüche 1 bis 5 und 7 bis 13, gekennzeichnet durch das Einarbeiten von zueinander versetzten durchgehenden Ausnehmungen in mindestens zwei zueinander senkrechten Ebenen und in mindestens zwei dazu um 45° versetzten Ebenen eines Rohkörpers zum Erreichen einer dreidimensional gitterartigen Gesamtstruktur und das Auftrennen der Gesamtstruktur in mindestens zwei die Elektroden oder Elektrodenteile darstellende Einzelstrukturen.

21. Verfahren nach Anspruch 20, dadurch gekennzeichnet, daß vor dem Auftrennen der Gesamtstruktur eine End- und/oder Zwischenscheibe aus elektrisch isolierendem Material zur Fixierung des Abstandes der Elektroden bzw. Elektrodenteile eingebracht wird.

22. Verfahren nach Anspruch 21, dadurch gekennzeichnet, daß mindestens eine der Gitterstruktur-Elektroden in einer Zwischenebene aufgetrennt wird und daß in dieser Ebene eine Zwischenwand über die gesamte Querschnittsfläche der Elektrodenanordnung eingebracht wird.

23. Verfahren nach Anspruch 20, dadurch gekennzeichnet, daß eine elektrolytisch trennende Zwischenwand dadurch gebildet wird, daß in einer entsprechenden Ebene des Rohkörpers keine Ausnehmungen eingebracht werden und daß eine Trennung mindestens einer der Elektroden in mindestens zwei Elektrodenteile durch Entfernen entsprechender stegartiger Elemententeile vorgenommen wird.

24. Verfahren nach Anspruch 23, dadurch gekennzeichnet, daß die stegartigen Elemententeile durch Einbringen von Trennausnehmungen entfernt werden.

25. Verfahren nach mindestens einem der Ansprüche 20 bis 24, dadurch gekennzeichnet, daß die Ausnehmungen gebohrt oder lasergeschnitten werden.

## Claims

1. Electrode arrangement (10, 110, 210, 310) for cells of batteries, accumulators or like electrochemical devices, having at least one negative electrode (11, 12; 111, 112; 211, 212; 311, 312) and at least one positive electrode (12, 11; 112, 111; 212, 211; 312, 311) which are maintained at a defined distance from one another, characterised in that the two electrodes (11, 12; 111, 112; 211, 212; 311, 312) each have a three-dimensional lattice-like structure and are arranged in a manner interlaced in all spatial directions.

2. Electrode arrangement according to Claim 1, characterised in that the two electrodes (11, 12; 111, 112; 211, 212; 311, 312) are of identical structure and are preferably maintained substantially at the same distance.

3. Electrode arrangement according to Claim 1 or 2, characterised in that each electrode (11, 12; 111, 112; 211, 212; 311, 312) is formed by a plurality of three-dimensional lattice elements (15; 115; 215; 315) comprising approximately V-shaped, web-like element part pairs (16, 17; 116, 117; 216, 217) which, in two planes perpendicular to one another, run from a junction (18; 118; 218; 318).

4. Electrode arrangement according to Claim 3, characterised in that the approximately V-shaped, web-like element part pairs (16, 17; 116, 117; 216, 217) are at the respective ends (25) thereof connected at least partially to further element part pairs or lattice elements in a manner adjacent to and/or by way of one another.

5. Electrode arrangement according to Claim 3 or 4, characterised in that the element parts of the element part pairs (16, 17; 116, 117; 216, 217) are formed by webs (19 to 22; 119 to 122; 219 to 222) over the length whereof the form of the cross section may be uniform or non-uniform.

6. Electrode arrangement according to at least one of Claims 1 to 5, characterised in that the three-dimensional lattice-like structure of the electrodes (11, 12) is constructed section-wise in three-dimensionally interlaced manner.

7. Electrode arrangement according to at least one of Claims 1 to 5, characterised in that the three-dimensional lattice-like structure of the electrodes (111, 112) is formed in a blank body (245) by recesses (155 to 158; 255 to 258; 355 to 358), in at least two planes (150, 151; 250, 251; 350, 351) perpendicular to one another and in at least two planes rotated through 45° thereto (A, B), which pass through and are displaced with respect to one another.

8. Electrode arrangement according to Claim 7, characterised in that the recesses (155 to 158) are formed by borings.

9. Electrode arrangement according to Claim 7, characterised in that the recesses (255 to 258) are formed, from two directions (C', D'; C", D") perpendicular to one another, by square recesses and from two diagonal directions (A, B; A', B') perpendicular to one another, by hexagonal recesses, and are preferably laser-cut.

10. Electrode arrangement according to at least one of Claims 7 to 9, characterised in that the separation of the electrodes (111, 112; 211, 212; 311, 312) is achieved by the at least partial disconnection of a wall sheet on all sides of the blank body (245).

11. Electrode arrangement according to at least one of Claims 7 to 9, characterised in that the separation of the electrodes (111, 112; 211, 212; 311, 312) results from the removal of defined webs, for example by boring or laser-cutting, and from the production of separating recesses (359, 359'), respectively, between the two electrodes.

12. Electrode arrangement according to at least one of Claims 1 to 11, characterised in that the lattice-like structure is of plastics material and is provided with a corresponding coating.

13. Electrode arrangement according to at least one of Claims 1 to 11, characterised in that the lattice-like structure is of a suitable metal.

14. Electrochemical device such as a battery, accumulator or the like constructed from an electrode arrangement (10; 110; 210; 310) according to at least one of the preceding claims, having two or more cells, characterised in that at least one of the lattice-like structures of the electrodes (11, 12; 111, 112; 211, 212; 311, 312) is split in one plane.

15. Electrochemical device according to Claim 14, characterised in that, in the separating plane (33) of one lattice-like structure, the respective other of the lattice-like structures of the electrodes (12, 11; 112, 111; 212, 211; 312, 311) is provided with an electrolytically separating intermediate wall (34).

16. Electrochemical device according to Claim 15, characterised in that the intermediate wall is formed by the building-in or casting-in of a correspondingly formed plate.

17. Electrochemical device according to Claim 15, characterised in that the intermediate wall (365) is formed in that, in a corresponding plane of the blank body (245), there are introduced no borings or recesses.

18. Electrochemical device according to Claim 17, characterised in that the intermediate wall (365) is part of one electrode (312, 311), and the other electrode (311, 312) which is adjacent on both sides to the intermediate wall (365) is disconnected therefrom, preferably by means of separating recesses (359).

19. Electrochemical device according to at least one of Claims 14, 17 or 18, characterised in that the lattice-like structure of the two electrodes (11, 12; 111, 112; 311, 312) is separated in planes which are in each case arranged at a distance from one another.

20. Process for the production of an electrochemical device such as a battery, accumulator or the like from an electrode arrangement according to at least one of Claims 1 to 5 and 7 to 13, characterised in that there are incorporated in a blank body, in at least two planes perpendicular to one another and in at least two planes displaced through 45° thereto, recesses which pass through and are displaced with respect to one another, in order to obtain a three-dimensional lattice-like complete structure, and the division of the complete structure into at least two individual structures which represent the electrodes or electrode parts.

21. Process according to Claim 20, characterised in that, before the division of the complete structure, there is introduced an end sheet and/or an intermediate sheet of electrically isolating material to fix the distance between the electrodes and electrode parts, respectively.

22. Process according to Claim 21, characterised in that at least one of the lattice-structure electrodes is divided in an intermediate plane, and in that in the latter plane there is introduced over the entire cross-sectional area of the electrode arrangement an intermediate wall.

23. Process according to Claim 20, characterised in that there is formed an electrolytically separating intermediate wall in that, in a corresponding plane of the blank body, there are introduced no recesses, and in that there is effected by the removal of corresponding web-like element parts a separation of at least one of the electrodes into at least two electrode parts.

24. Process according to Claim 23, characterised in that the web-like element parts are removed by the introduction of separating recesses.

25. Process according to at least one of Claims 20 to 24, characterised in that the recesses are bored or laser-cut.

## Revendications

1. Ensemble électrode (10, 110, 210, 310) pour éléments de batteries, d'accumulateurs ou équivalents, dispositifs électrochimiques avec au moins une électrode négative (11, 12 ; 111, 112 ; 211, 212 ; 311, 312) et au moins une électrode positive (12, 11 ; 112, 111 ; 212, 211 ; 312, 311), qui sont maintenues entre elles selon un certain espacement, caractérisé en ce que les deux électrodes (11, 12 ; 111, 112 ; 211, 212 ; 311, 312) présentent chacune une structure de type grille en trois dimensions et sont disposées de façon entrelacée dans toutes les orientations de l'espace.

2. Ensemble électrode selon la revendication 1, caractérisé en ce que les deux électrodes (11, 12 ; 111, 112 ; 211, 212 ; 311, 312) présentent une structure identique et sont de préférence maintenues selon un espacement pour l'essentiel identique.

3. Ensemble électrode selon la revendication 1 ou 2, caractérisé en ce que chaque électrode (11, 12 ; 111, 112 ; 211, 212 ; 311, 312) est réalisée au moyen de plusieurs éléments de grille en trois dimensions (15 ; 115 215 ; 315) composés de paires de composants (16, 17 ; 116, 117 ; 216, 217) de type barrettes en forme approximative de V partant d'un point nodal (118 ; 118 ; 218 ; 318) dans deux plans perpendiculaires l'un à l'autre.

4. Ensemble électrode selon la revendication 3, caractérisé en ce que les paires de composants (16, 17 ; 116, 117 ; 216, 217) de type barrettes en forme approximative de V sont reliées au niveau de leurs extrémités respectives (25) au moins pour partie avec d'autres paires de composants ou d'autres éléments de grille de façon à être disposés les uns à côté des autres et/ou les uns sur les autres.

5. Ensemble électrode selon la revendication 3 ou 4, caractérisé en ce que les composants des paires de composants (16, 17 ; 116, 117 ; 216, 217) sont constitués de barrettes (19 à 22 ; 119 à 122 ; 219 à 222) avec une section transversale régulière ou irrégulière sur la longueur.

6. Ensemble électrode selon au moins l'une des revendications 1 à 5, caractérisé en ce que la structure de type grille en trois dimensions des électrodes (11, 12) est réalisée par portions entrelacées en trois dimensions.

7. Ensemble électrode selon au moins l'une des revendications 1 à 5, caractérisé en ce que la structure de type grille en trois dimensions des électrodes (111, 112) est réalisée au moyen de cavités traversantes (155 à 158 ; 255 à 258 ; 355 à 358) décalées entre elles dans au moins deux plans perpendiculaires l'un à l'autre (150, 151 ; 250, 251 ; 350, 351) et au moins dans deux plans tournés respectivement à 45 ° (A, B) dans un corps brut (245).

8. Ensemble électrode selon la revendication 7, caractérisé en ce que les cavités (155 à 158) sont conçues par alésages.

9. Ensemble électrode selon la revendication 7, caractérisé en ce que les cavités (255 à 258) présentent la forme de cavités parallélépipédiques à partir de deux orientations perpendiculaires l'une à l'autre (C', D' ; C", D") et de cavités hexagonales à partir de deux orientations en diagonale perpendiculaires l'une à l'autre (A, B ; A', B') et sont de préférence découpées au laser.

10. Ensemble électrode selon au moins l'une des revendications 7 à 9, caractérisé en ce que la séparation des électrodes (111, 112 ; 211, 212 ; 311, 312) est réalisée par séparation au moins partielle d'une flasque de paroi sur toutes les faces du corps brut (245).

11. Ensemble électrode selon au moins l'une des revendications 7 à 9, caractérisé en ce que la séparation des électrodes (111, 112 ; 211, 212 ; 311, 312) est réalisée par enlèvement par ex. par perforation ou découpe au laser de barrettes déterminées et par production de cavités de séparation (359, 359') entre les deux électrodes.

12. Ensemble électrode selon au moins l'une des revendications 1 à 11, caractérisé en ce que la structure de type grille est en plastique et est dotée d'un revêtement correspondant.

13. Ensemble électrode selon au moins l'une des revendications 1 à 11, caractérisé en ce que la structure de type grille est fabriquée dans un métal approprié.

14. Dispositif électrochimique fabriqué à partir d'un ensemble électrode (10 ; 110 ; 210 ; 310) selon au moins l'une des revendications précédentes, tel que batteries, accumulateurs ou équivalents, avec deux cellules, ou plus, caractérisé en ce qu'au moins l'une des structures de type grille des électrodes (11, 12; 111, 112 ; 211, 212 ; 311, 312) est séparée en un plan.

15. Dispositif électrochimique selon la revendication 14, caractérisé en ce que l'autre respectivement des structures de type grille des électrodes (12, 11 ; 112, 111 ; 212, 211 ; 312, 311) est dotée dans le plan de séparation (33) d'une structure de type grille d'une paroi intermédiaire à séparation électrolytique (34).

16. Dispositif électrochimique selon la revendication 15, caractérisé en ce que la paroi intermédiaire est formée en montant ou en coulant une plaque formée de façon correspondante.

17. Dispositif électrochimique selon la revendication 15, caractérisé en ce que la paroi intermédiaire (365) est conçue de telle sorte qu'il n'est pas formé d'alésages ou de cavités dans un plan correspondant du corps brut (245).

18. Dispositif électrochimique selon la revendication 17, caractérisé en ce que la paroi intermédiaire (365) fait partie intégrante d'une électrode (312, 311) et l'autre électrode (311, 312) de la paroi intermédiaire (365) est séparée des deux côtés adjacents à celle-ci de préférence au moyen de cavités de séparation (359).

19. Dispositif électrochimique selon au moins l'une des revendications 14, 17 ou 18, caractérisé en ce que la structure de type grille des deux électrodes (11, 12; 111, 112 ; 311, 312) est séparée dans des plans respectifs disposés de façon espacée l'un de l'autre.

20. Procédé de fabrication d'un dispositif électrochimique, tel que batteries, accumulateurs ou équivalents, à partir d'un ensemble électrode selon au moins l'une des revendications 1 à 5 et 7 à 13, caractérisé par le perçage de cavités traversantes décalées entre elles dans au moins deux plans perpendiculaires l'un à l'autre et dans au moins deux plans respectivement décalés de 45 ° d'un corps brut pour obtenir une structure globale de type grille en trois dimensions et par la séparation de la structure globale en au moins deux structures individuelles constituant les électrodes ou les parties d'électrodes.

21. Procédé selon la revendication 20, caractérisé en ce qu'avant la séparation de la structure globale, il est mis en place une flasque terminale et/ou intermédiaire composée de matériau électriquement isolant pour fixer l'espacement des électrodes et le cas échéant des parties d'électrodes.

22. Procédé selon la revendication 21, caractérisé en ce qu'au moins l'une des électrodes de structure de grille est séparée dans un plan intermédiaire et en ce qu'une paroi intermédiaire est installée dans ce plan sur l'ensemble de la surface de section transversale de l'ensemble électrode.

23. Procédé selon la revendication 20, caractérisé en ce qu'une paroi intermédiaire de séparation électrolytique est conçue de telle sorte qu'il ne soit pas prévu de cavités dans un plan correspondant du corps brut et en ce qu'une séparation d'au moins une des électrodes en au moins deux parties d'électrode est réalisée par enlèvement de composants de type barrettes correspondants.

24. Procédé selon la revendication 23, caractérisé en ce que les composants de type barrettes sont enlevés par la mise en place de cavités de séparation.

25. Procédé selon au moins l'une des revendications 20 à 24, caractérisé en ce que les cavités sont alésées ou découpées au laser.
